Europäisches Patentamt

European Patent Office

Office européen des brevets

(19)

(11) Publication number: **0 096 407**

**A1**

(12) # EUROPEAN PATENT APPLICATION

(21) Application number: **83105547.0**

(51) Int. Cl.³: **G 06 F 3/12**

(22) Date of filing: **06.06.83**

(30) Priority: **04.06.82 US 384958**

(43) Date of publication of application:
**21.12.83 Bulletin 83/51**

(84) Designated Contracting States:
**AT BE CH DE FR GB IT LI LU NL SE**

(71) Applicant: **COMPUTERS INTERNATIONAL
INCORPORATED
3540 Wilshire Boulevard
Los Angeles, California 90010(US)**

(72) Inventor: **Munzig, Arthur L., Jr.
5718 W. Lindenhurst
Los Angeles California 90036(US)**

(74) Representative: **Frankland, Nigel H. et al,
FORRESTER & BOEHMERT Widenmayerstrasse 4/1
D-8000 München 22(DE)**

(54) Universal computer-printer interface.

(57) An interface for installation in a printer housing, to provide an adaptable connection between the printer and any of a variety of computers and to allow the printer-interface combination to emulate any of a number of different printers having different protocols for printer control codes. The interface can be conveniently switched, either manually or under computer control, to adapt to a different control code protocol, to select one of several different standards for digital data transfer, to select a different baud rate for receiving serial data, or to adapt automatically to a transmission baud rate. Manual switches also permit reversal of the polarity of selected signals used in the transmission of data, to adapt to the conventions used in a selected computer. The interface also optionally performs or initiates a number of print formatting control functions.

## UNIVERSAL COMPUTER-PRINTER INTERFACE

## BACKGROUND OF THE INVENTION

This invention relates generally to computer printers, and, more particularly, to printers of the type designed to produce "letter quality" or "typewriter quality" printing from data transmitted to it, usually from a computer. Prior to about 1970, the only letter quality printers were electric typewriters adapted for connection to computers. A dramatic change in this technology occurred with introduction of the "daisywheel" printer, having a print element in which the characters are located near the ends of small flat bars or reeds disposed radially about a central hub, like the spokes of a wheel with no outer rim.

Initially, daisywheel printers were manufactured principally by only three companies. Although all used the American Standard Code for Information Interchange (ASCII) standard for encoding printable characters and some control functions, each developed slightly different sets of codes for representing many other printer control functions. The ASCII standard defines eight-bit codes to be used to represent printable characters and certain other control functions, but leaves some eight-bit code combinations open for individual definition.

Also, different standards evolved for encoding new control functions as two-character strings, beginning with an "escape" code, usually indicated as ESC and having a hexadecimal code of 1B, and followed by another character code. These control code pairs are used for indicating such functions as setting and clearing tabs, forward and reverse line feeding, designating super- scripts and subscripts, underlining, setting margins, and so forth. Because the control codes for different printers were not, and still are not, identical, programs written to employ a particular printer could not be used without modification on a similar computer connected to a different printer. Moreover, so long as the early manufacturers of daisywheel printers maintained a dominant position in the marketplace, these sets of control codes, referred to as protocols, became practically standards of the industry. A new daisywheel printer manufacturer could not achieve any measure of success without adopting one or another of the existing printer control protocols. Use of a printer with a protocol different from that for which a user's programs were written would require substantial modification of the computer programs.

A further complication in adapting a printer to operate in conjunction with an existing computer and its programs, is that different printers may employ different hardware conventions for the exchange of information. For example, one printer might transmit a positive voltage level to indicate that it is ready to accept more data, while another printer might use a negative level for the same purpose. If a computer user elects to install a different printer, the programs would need to be modified to reflect differences of this kind, as well as differences in the control code protocol.

A related complication is that there are different electrical interface standards for the transmission of digital data. Basically these standards fall into two categories, relating to serial or parallel data transmission. In a computer-printer interface of the serial type, information is transmitted bit by bit from the computer to the printer, and is then rearranged in eight-bit ASCII codes. In a computer-printer interface of the parallel type, there are normally eight data lines between the computer and the printer, and the information is transmitted character by character, eight bits at a time in parallel. When selecting a different printer for use with a computer, the user has to be sure that the new printer employs a data transfer standard that is also available in the computer.

A user or potential purchaser of a new printer would often find these problems insurmountable. Even if the protocol differences could be taken care of by program changes, there would frequently be a hardware mismatch, either in data transmission standards, or in available plugs and cables between the computer and printer.

Prior to the present invention, there were basically two approaches for reducing these difficulties. The first approach is was to compensate for differences in protocols and signal level conventions by modifying software in the computer. Usually, a user's application programs do not need to be modified, but a new printer "driver" program must be developed to perform a translation of the control codes transferred from an application program. The printer driver can also compensate for differences in signal level conventions for ready signals and the like. However, the driver cannot overcome a hardware incompatability between serial and parallel interfaces, or a cabling mismatch. The principal disadvantage of this approach is that a computer user who wishes to purchase a new type of printer must also buy or have developed a new printer driver program. Even then, the printer may not properly connect to the computer without substantial hardware modifications.

The only other approach available prior to this invention was to employ a separate adapter panel to perform each desired translation of protocols, and to switch adapter panesl when different protocols were required.

It will be appreciated from the foregoing that there has been a need in the computer printer field for an interface that is conveniently adaptable for connection to, and use with, a variety of computers, and is also able to emulate operation of a variety of printers. The present invention satisfies this need.

## SUMMARY OF THE INVENTION

The present invention resides in a computer-printer interface that permits connection of a printer to any of a variety of computers, and permits programs in the computer to be run without modification, even though the programs were written to address a different type of printer. In effect, then, the interface of the invention emulates operation of any of a number of printers, and may be readily adapted to utilize a selected hardware data transmission standard.

Briefly, and in general terms, the novel interface of the invention comprises register means for registering data received from the computer; multi-conductor means for connecting the register means to the computer, including a multi-pin plug selected for connection to the computer, and protocol selection means operable by manual control or computer control to select a protocol of printer control codes corresponding to those of a selected printer to be emulated. Also included are buffer memory means for storing printer control codes and printable character codes as received from the computer; means coupled to the protocol selection means, for generating printer control signals in response to detection of printer control codes transmitted from the computer; and means for generating print signals corresponding to the printable character codes stored in the buffer memory means.

The interface also includes serial and parallel data transfer control means, and data transfer mode selection means. The data transfer mode selection means in the presently preferred embodiment of the invention includes both a manually operated switch and means responsive to control codes transmitted from the computer.

The presently preferred embodiment of the invention also includes means for switching polarities of certain control and status signals to be consistent with those used in the printer being emulated or in the computer to which the interface is connected. In addition, the preferred embodiment of the invention includes means for selecting from a range of baud rates, to be consistent with the rate at which information is transmitted by the computer. In one optional mode of operation, the interface of the invention adapts automatically to the baud rate of the incoming data.

In accordance with another aspect of the invention, the interface includes means for formatting lines of print as directed by control codes from the computer. For example, the proportional spacing values, i.e., the widths assigned to the printable characters, can be changed by designated control codes. Also, margin justification and text centering can be effected in the printer interface rather than in the computer software, and a margin justification limit can be varied by means of control codes.

It will be appreciated from the foregoing that the present invention represents a significant advance in the field of computer printers. In particular, the invention provides a novel interface that may be quickly adapted for connection to any of a variety of computers, and to emulate any of a variety of printers. Other aspects and advantages of the invention will become apparent from the following more detailed description, taken in conjunction with the accompanying drawings.

## BRIEF DESCRIPTION OF THE DRAWINGS

FIGURE 1 is a simplified block diagram showing the interconnection of a computer and a printer, through the novel universal interface of the invention;

FIG. 2 is a simplified block diagram of the interface of the invention;

FIG. 3 is a hardware block diagram of the interface;

FIG. 4a is a flow chart showing the main sequence of operations of the interface in performing the function of printing characters;

FIG. 4b is a flow chart showing operation of the interface in performing the functions of receiving and storing data;

FIG. 5 is a flow chart showing the steps of initialization of the interface upon start-up;

FIG. 6 is a flow chart similar to FIG. 4a, but showing the steps performed in more detail;

FIG. 7 is a flow chart similar to FIG. 4b, but showing in addition the structure of protocol tables used in the interface;

FIG. 8 is a flow chart showing the steps performed in changing a protocol table to select a different printer for emulation; and

FIG. 9 and FIG. 10 are simplified flow charts showing the steps performed in selecting serial or parallel input to the interface.

## DESCRIPTION OF THE PREFERRED EMBODIMENT

As shown in the drawings for purposes of illustration, the present invention is principally concerned with computer printers, and, more particularly, printers of the type designed to produce letter quality printing from data transmitted from a computer. Although all such printers use basically the same standard for encoding printable characters for transmission, a variety of standards have developed for encoding special printer control functions. These standards are referred to as protocols. Consequently, programs written for a particular printer have to be modified if the printer is replaced with one of a different type. Prior to this invention, there has been no satisfactory way of overcoming these difficulties.

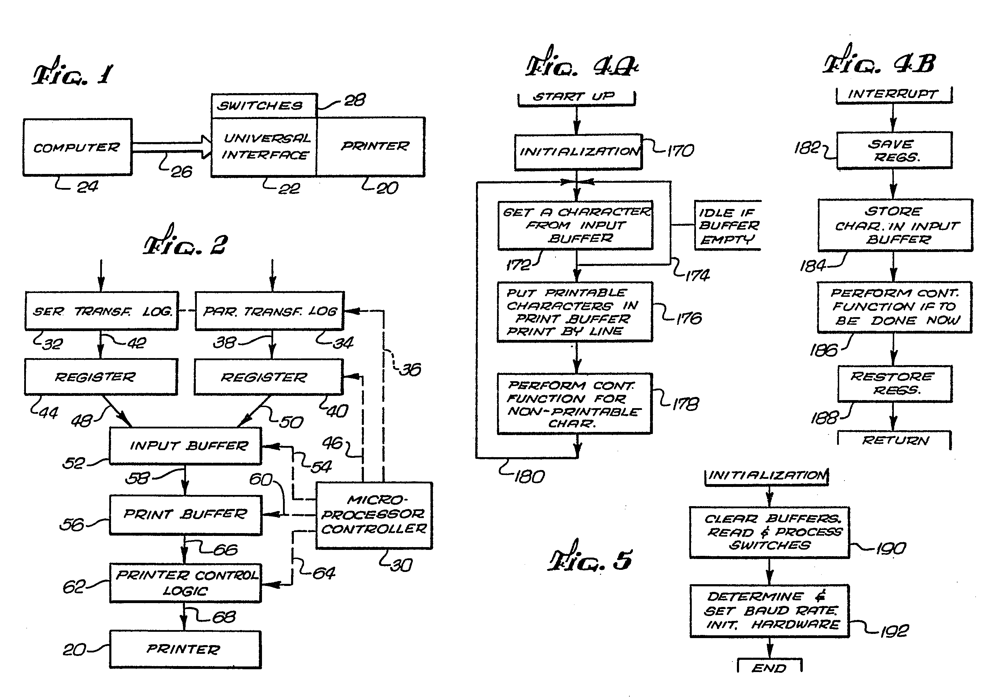

In accordance with the invention, a printer, indicated by reference numeral 20 (FIG. 1) is provided with a unviersal interface, indicated at 22, for communication with a computer 24 over a data path 26. As will be described in detail, the interface 22 may be readily adapted, either by manual switches, indicated at 28, or by special commands transmitted over the data path 26, to "emulate" any of a number of different printers, by effecting a translation of control codes in order to perform the desired functions. As far as the computer 24 is concerned, the printer 20 and its interface 22 behave then exactly like a desired emulated printer. The printer 20 has its own protocol of control codes. If these are selected, the interface 22 then is not operating in an emulation mode, since no code translation is needed. Preferably, the printer 20 and interface 22 can be manufactured for sale at a lower cost than any of the printers that it emulates. More importantly, the printer 20 and interface 22 can emulate any of a number of printers without modification of programs in the computer 24.

In accordance with another aspect of the invention, the data path 26 takes the form of a multi-line cable which is appropriately terminated at the computer end to plug directly into the computer 24. The universal interface 22 is readily adaptable to receive data in accordance with one of four commonly used standards for digital data transmission, depending which standard or standards are available in the computer 24.

Thus, the user has only to select an appropriate cable for the data path 26, depending on the characteristics of the computer 24, and the printer 20 can be connected to the computer and switched to the appropriate protocol and appropriate interface standard.

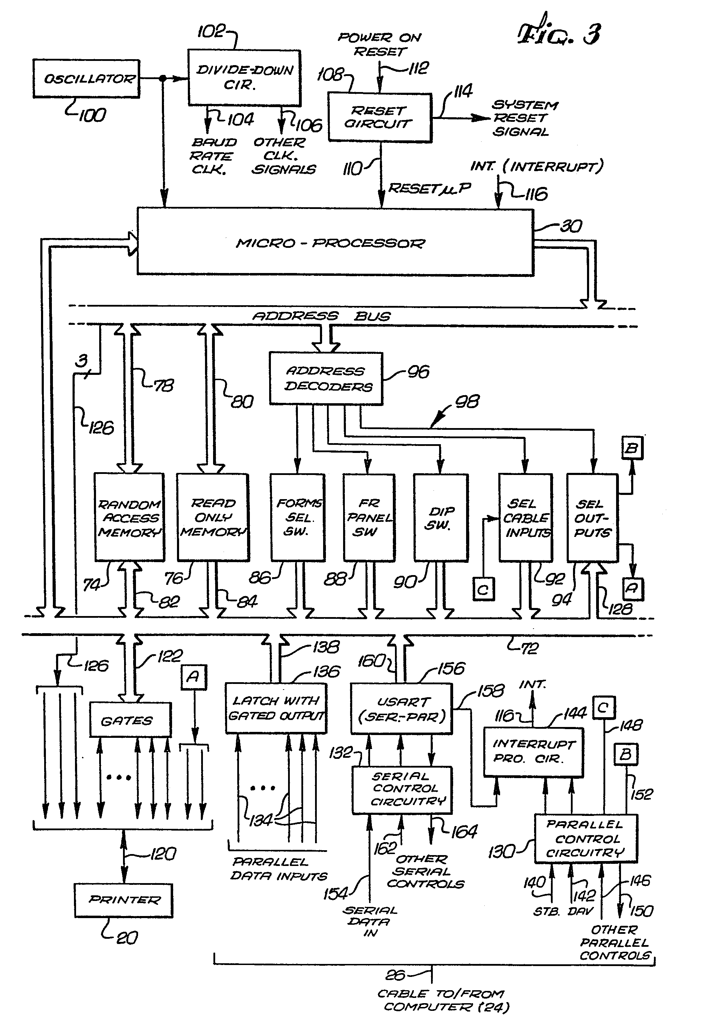

As shown in FIG. 2, the interface 22 (FIG. 1) is preferably implemented in the form of a microprocessor 30. It will be understood, however, that the interface could, instead, have been implemented in hard-wired form. The interface 22 includes serial transfer logic 32 and parallel transfer logic 34 for communication with the computer 24 (FIG. 1) in either a serial data transmission mode or a parallel data transmission mode. The microprocessor 30 controls operation of the logic 32 and 34, as indicated by a broken line 36. From the parallel transfer logic 34, data flows over line 38 to a register 40. If the serial transfer logic 32 is operational, the serial data are passed over line 42 and accumulate in parallel form in register 44. Character codes in one of the registers 40 and 44 are gated, under control of a signal on line 46 from the microprocessor 30, over lines 48 or 50 to an input buffer 52. Flow of data into and out of the input buffer 52 is also controlled by the microprocessor 30, as indicated by broken line 54.

Incoming data from the computer is stored in the input buffer 52 shortly after arrival at the interface. The buffer 52 is preferably large enough to hold many pages of typed data, so that the computer 24 may be freed for other activities after transmitting the data to the interface 22. As soon as information is available in the input buffer, it is further processed by the microprocessor 30 and stored character by character into a print buffer 56, as indicated by a data line 58. The print buffer 56 is also under microprocessor control, as indicated by broken line 60. As soon as a full print line of characters has been accumulated in the print buffer 56, the microprocessor 30 prints the line under control of printer control logic 62, which is also directed by the microprocessor, as indicated by broken line 64. Thus, character codes from the print buffer 56 are transmitted over line 66 to the printer control logic 62, and then over line 68 to the printer 20.

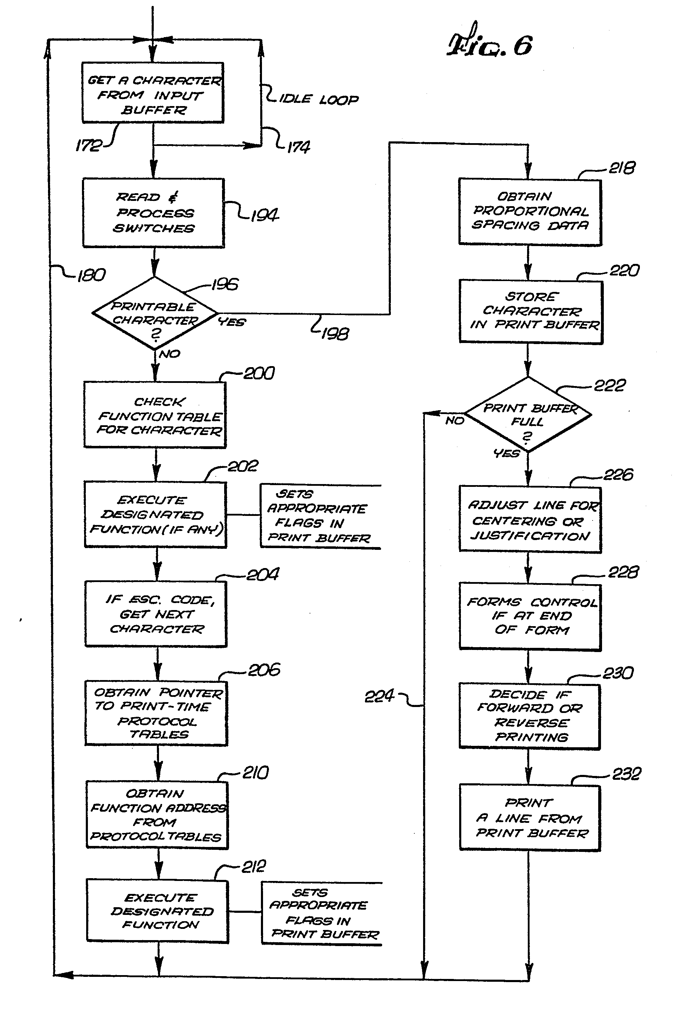

It will be understood that FIG. 2 is a simplified diagram intended only for purposes of explanation. It correctly depicts the logical flow of data through the universal interface 22, but in the embodiment of the invention to be discussed in more detail, some of the elements and data flow lines of FIG. 2 have no true physical counterparts. For example, the input buffer 52 and the print buffer 56 are part of a single memory device that is logically divided into input and print buffers, and the line 58 is, in fact, a flow of data through the microprocessor 30. These differences can be better understood by consideration of the hardware of the interface 22, as shown in more detail in FIG. 3.

It will be seen from FIG. 3 that the microprocessor 30 has associated with it an address bus 70 and a data bus 72. The interface hardware also includes a random-access memory 74, which embodies the input buffer 52 and the print buffer 56, and a read-only memory 76, principally for storage of programs of instructions for the microprocessor 30. As indicated by the arrows 78 and 80, respectively, both the random-access memory 74 and the read-only memory 76 are addressable from the address bus 70. As indicated by the bi-directional path 82, the random access memory 74 can transfer data to or from the data bus 72, while the read-only memory 76 can only supply data to the data bus, as indicated by the data path 84. Also available as inputs to the microprocessor 30, through the data bus 72, are a number of manually operable switches. The principal ones of these are forms selection thumb-wheel switches, indicated at 86, panel switches 88 located on the front panel of the printer, and a number of manual switches referred to as DIP switches, indicated at 90, packaged in three dual-in-line packages. Also connected to the data bus 72 are certain cable input signals, indicated at 92, derived from a cable forming the data path 26 (FIG. 1) between the interface 22 and the computer 24, and selected outputs, indicated at 94, principally to the same cable and to the printer. The switches 86, 88 and 90, the selected cable inputs 92 and the selected outputs 94 are all addressed through address decoders 96, which receive address information from the address bus 70 and select the respective output and input devices over lines shown at 98.

The microprocessor 30 is supplied with timing signals from an oscillator 100 connected to a divide-down circuit 102, from which is derived a baud rate clock signal on line 104 and other clock signals necessary for operation of the interface, on line 106. In addition, there is a reset circuit 108, which provides a reset signal to the microprocessor 30 over line 110 in response to a reset signal on line 112 during start-up of the interface 22. The reset circuit 108 also provides a system reset signal on line 114 to various elements of the interface. The only other control lines of the microprocessor 30 shown in FIG. 3 is an interrupt line 116, the significance of which will be explained shortly. It will also be appreciated that the micro-processor, which in the present embodiment is a conventional device of the well-known Z-80 type, has other control lines of a conventional nature, which are not shown in the drawing.

The other elements of the hardware of the interface that remain to be discussed are those involving connection to the printer 20 and to the computer 24. Connection to the printer 20 is made over a multi-line path indicated by the bi-directional line 120. The information passed to the printer 20 includes eight bits of character information derived from the data bus over path 122 and through gates 124. In addition, address information is also required, since the printer 20 may include different subsidiary controllers for effecting movement of the print wheel, the carriage, and the line advance mechanism. Accordingly, three bits of address information are shown as being derived over line 126 from the address bus 70. Finally, other control signals may be output directly to the printer 20 from the data bus 72. These are shown as being supplied over path 128 from the data bus 72 to the block labeled "selected outputs" (94) and thence over connector A to the lines 120. Data paths 122 and 120 to the printer 20 are shown as bi-directional, since status information can be requested from the printer and passed back over the same lines that are used to transmit data to the printer.

Connection of the interface 22 to the computer 24 is of a more complex nature, because of the possible use of one of two types of parallel data transfer standards or one of two types of serial data transfer standards. Accordingly, as shown in FIG. 3, the interface 22 includes parallel control circuitry 130 and serial control circuitry 132. Parallel data inputs are transmitted from the computer 24 over lines 134, and are initially stored in a latch 136 having gated outputs to a data path 138 connected to the data bus 72. Depending on the type of parallel interface being used, either a strobe signal on line 140 or a data-available signal on line 142 will accompany the parallel data input on lines 134. One of these two control signals is supplied to the parallel control circuitry 130 and also to an interrupt processing circuit 144 which, upon receipt of one of the signals, generates an interrupt on line 116, to notify the microprocessor 30 that a parallel input is available in the latch 136.

Other parallel control signals are received as indicated by line 146 to the parallel control circuitry 130, and some of these are read directly into the data bus 72 over line 148, and through connector C to the selected cable inputs 92. There are also control signals directed from the interface 22 to the computer 24, as indicated by the arrow 150 from the parallel control circuitry 130. These are supplied to the control circuitry 130 over line 152, which is coupled via connector B to the selected outputs block 94.

Serial data is input over line 154 to the serial control circuitry 132 and is then transmitted to a universal serial asynchronous receiver/transmitter (USART) 156, for serial-to-parallel conversion. When the USART 156 has accumulated eight bits of input data, it generates signal on line 158 to the interrupt processing circuit 144, which in turn generates an interrupt on line 116 to the microprocessor 30. The microprocessor 30 can then read data from the USART 156 over line 160 to the data bus 72. Other necessary control signals are received from the computer 24, as indicated by line 162, or are transmitted to the computer, as indicated by line 164.

In coupling the interface 22 to the computer 24, an appropriate selection of the lines 26 shown at the bottom of FIG. 3 is connected to the computer, depending upon the equipment available at the computer and the data transmission standard employed. The lines 26 include sufficient control signal lines to adapt to two parallel data transfer standards and two serial data transfer standards. The parallel standards are the ANSI-IEEE STD. 488-1978 standard for parallel data transfer. ANSI is the American National Standards Institute and IEEE is the Institute of Electrical and Electronics Engineers. The other parallel data transfer standard has no name but is widely known in the industry and is sometimes referred to as the Dataproducts standard. The serial data transfer standards that can be accommodated are the RS-232 standard promulgated by the Electronic Industries Association (EIA), and the serial standard referred to as current-loop, suitable for communications with teletype machines.

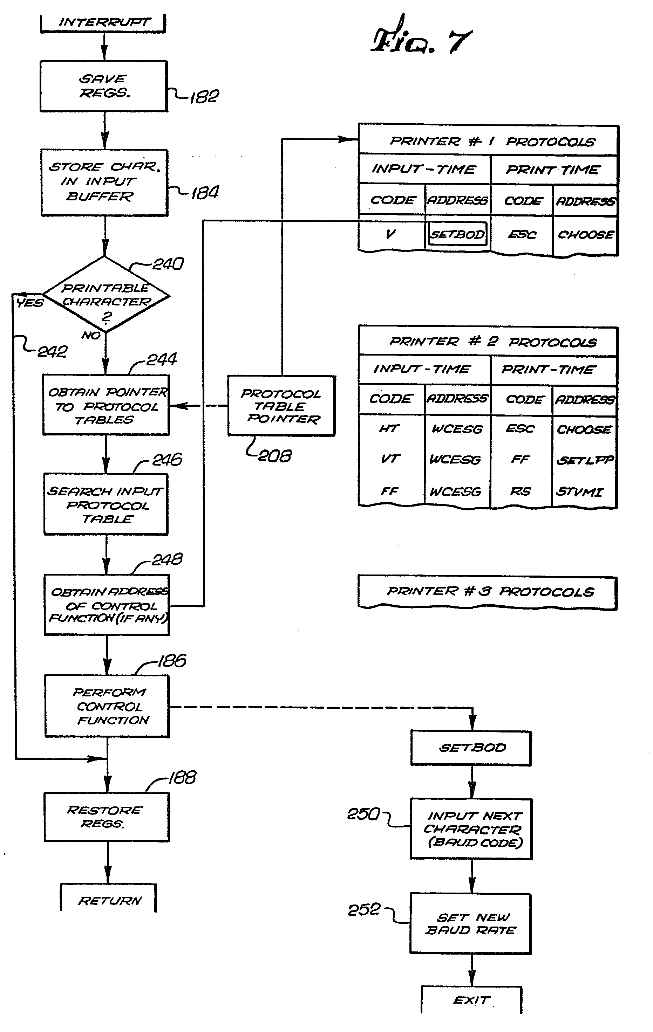

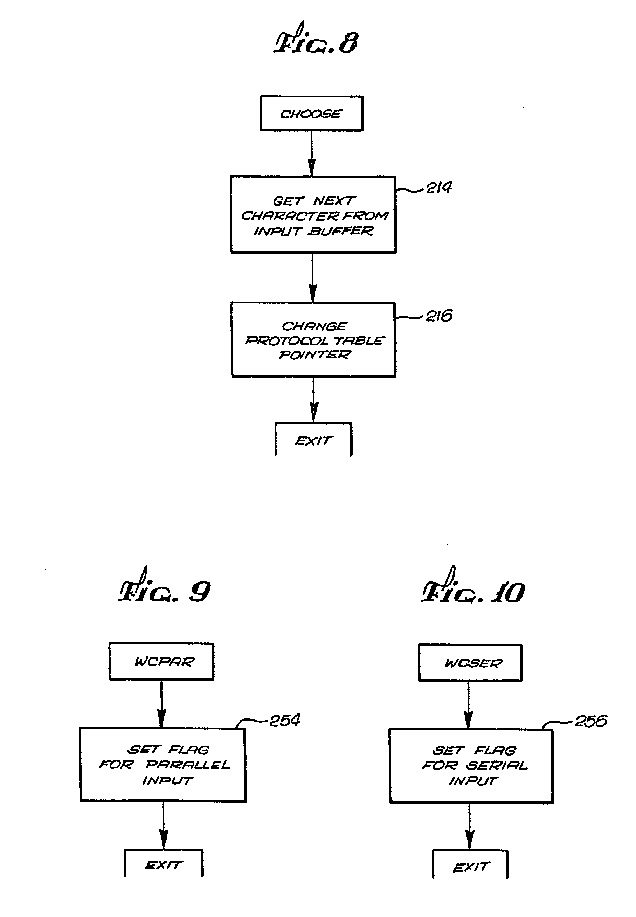

Operation of the hardware described with reference to FIG. 3 can best be understood by reference to the flow charts included in FIGS. 4-10. As shown in FIG. 4a, when the microprocessor 30 is first started up, an initialization function, indicated by block 170 is first executed. Then, a character is retrieved from the input buffer 52, as indicated at block 172. If the input buffer 52 is empty, the microprocessor remains in a relatively idle state, as indicated by line 174 looping back to the entry point of block 172 again. After a character has been retrieved from the input buffer 52, if it is a printable character it is immediately stored in the print buffer 56, as indicated at block 176. As indicated in block 178, control functions are performed for certain non-printable characters that represent control functions to be performed at the stage that data is printed. As indicated by line 180, the aforedescribed sequence of functions is repeated for additional characters retrieved from the input buffer 52, until such time as the buffer is emptied. This sequence of functions is described in more detail with reference to FIG. 6.

Filling the input buffer 52 is accomplished by the functions shown in FIG. 4b. Upon the occurrence of an interrupt signal on line 116 to the microprocessor 30 (FIG. 3), the microprocessor registers are first saved, as indicated at 182. Then the character input from the computer 24 is stored in the input buffer 56, as indicated at 184. If the character being processed relates to a control function that must be performed at data-input time, the appropriate function is performed right away, as indicated at 186. Then the contents of the microprocessor registers at the time of the interrupt are restored, as indicated at 188, and return is made to the point of interruption of the microprocessor. It will be understood that the microprocessor performs the functions shown in FIG. 4a on a continuous basis unless interrupted by data arriving from the computer 24, at which time the interrupt routine described with respect to FIG. 4b is executed.

The initialization function 170 of FIG. 4a is shown in more detail in FIG. 5. Basically, it first involves a software initialization step in which the buffers 52 and 56 are cleared, and the switches 86, 88, and 90 (FIG. 3) are read and the values they represent are processed by setting appropriate flags for the microprocessor programs. The ·software initialization step is shown at 190. Then follows a hardware initialization step 192, including a determination of the baud rate.

As shown in more detail in FIG. 6, the main processing loop of FIG. 4a includes the first step of getting a character from the input buffer 52, as shown at 172. Next, the switches 86 relating to forms selection and the printer control switches 88 are read, as indicated at 194. A question is next posed, at block 196 as to whether the character retrieved is a printable one. If it is, the path indicated by line 198 is followed.

If the character is not printable, a search is first made for the character a function table stored in the read only memory 76, as indicated at block 200. If the non-printable character is located in the function table, the table provides the address of a corresponding function to be performed, and the required function is performed as indicated at block 202. Basically, the function table is a list of control codes and their functions that are common to all printers that the interface is required to emulate. If the non-printable character is an escape code (usually written ESC), this indicates that a special control function encoded in the next following character is to be executed. It is in this area that printers differ considerably from each other in the code assignments for these special control functions.

As indicated at block 204, if the detected non-printable character is an escape code, the next character is examined. Then a pointer is obtained to a set of protocol tables, as indicated at 206. The structure of these tables is shown in fragmentary form in FIG. 7. Basically, for each printer that is to be emulated there are two tables of control codes, one for use at input time, i.e., in conjunction with the interrupt processing routine shown ·in FIG. 4b and in FIG. 7, and the other to be used at print time, i.e., in conjunction with the main print routine included in FIG. 4a and in FIG. 6. Each such protocol table includes a list of codes that may follow an escape code, and a corresponding list of addresses of sequences of program instructions for performing the required functions. A protocol table pointer, shown at 208 in FIG. 7, points to the protocol tables for one of several different printers that may be emulated. In block 210 of FIG. 6, the address corresponding to the control code currently being processed is obtained from the protocol tables, and in block 212 the sequence of instructions beginning at the address thus obtained is executed.

By way of example, one of the most important routines for sequences of instructions that may be executed by this means is the designation of a different printer for emulation. It will be noted in FIG. 7 that the first entry in the print-time protocols, for both printer #1 and printer #2, is a code listed as ESC, i.e., the escape code. Thus, if the processing of input characters in accordance with the flow chart of FIG. 6 results in the detection of a first escape code, which leads to a search of the protocol tables, and next in the detection of a second escape code, then the address retrieved from the protocol table will be that labeled CHOOSE. This happens to be the address of a sequence of instructions for changing the protocol table pointer to a new value. As shown in FIG. 8, the CHOOSE sequence first gets yet another character from the input buffer, as shown at 214, and then changes the protocol table pointer as shown at 216. The code for changing protocols is a sequence of three characters including two escape codes followed by the code number of the new printer whose protocol is to be selected.

Protocol selection is initially controlled by the settings of DIP switches C5-C8, i.e., during the software initialization step 190 (FIG. 5), and may be later changed by transmission of control codes to the interface, as discussed above. Table 2 defines the protocol selection codes.

The protocol designated "CII" is the one used by the printer that is coupled to the interface in the presently preferred embodiment of the invention. The "diagnostic" protocol is used as a diagnostic tool in testing the interface. It allows the user to print out hexadecimal control codes to determine what is being received from the computer. The "Softkey" protocol permits a user to define a character code to be used instead of the escape code when regular ESC codes are not used.

If the answer to the printable-character question in block 196 of FIG. 6 is affirmative, and if proportional spacing is selected by the user, the proportional spacing data is next obtained for the character, as indicated at block 218. Then the character is stored in the print buffer 56, as indicated at block 220. As is conventional in some printers and word processors, each printable character has assigned to it a specific character width, narrow letters such as i and j being assigned a smaller width than wide letters such as m and w. If the print buffer 56 does not contain a full line after storing the character in the buffer, as determined by the question posed in block 222, processing of this particular character is complete. The path then taken is shown by line 224, and another character is retrieved, as indicated in block 172.

If the print buffer contains a full line, a printable line is ready for transmittal to the printer 20. First, however, the information stored in the print buffer 56 is adjusted for text centering or for right-hand justification, either of which may have been selected. This is indicated in block 226. It will be understood that block 226 may also be reached if the character just processed involves a line feed or carriage return, in other words a forced end-of-line. In this instance, text centering of the line may have also been requested by a special control code, in which case blanks would be inserted at the start of the line to center the textual material in the middle of the page. If justification has been selected, the remaining space between the end of the last word of text, and the right hand margin will be distributed as evenly as possible among the word spaces in the line.

One of the switches that is read periodically by the microprocessor is a forms control switch that determines the length of the form, i.e, the number of lines of print per page of the form. From this information, and the number of lines printed on the page, the microprocessor can determine when the end of the page has been reached. As indicated in block 228, if the end of the page has been reached, forms control functions may have to be performed, such as ejecting a page if single sheets are used, or advancing a continuous form to the top of the next page.

Before printing, a decision has to be made as to whether printing is to be formed in a forward or reverse direction, as indicated at block 230. For the printer employed in the preferred embodiment of the invention, the print carriage can operate in either direction, principally to avoid wasting time in reversing the carriage to the left hand position before printing each line. Depending on the position of the carriage after printing the previous line, the carriage may be moved either to the right-hand end or the left-hand end of its travel for printing the current line. Finally, as indicated in block 232, the line is printed from the print buffer 56 and return is made to get another character for input.

The interrupt processing routine of FIG. 4b is shown in more detail in FIG. 7. It will be recalled that the microprocessor registers are first saved, as indicated at 182, and then the character being input is stored in the input buffer 52, as indicated at 184. If the character is printable, as determined by the test in block 240, nothing further needs to be done at this point, and exit is made over line 242 to block 188, for restoration of the registers. If the character is not printable, the protocol table pointer 208 is next obtained, as indicated at 244. Then a search is made of the input-time protocol table, as indicated at 246.

As discussed with respect to FIG. 6, the protocol tables include code tables of two basic types for each printer to be emulated. There are some control codes that have to be processed immediately at input time, and these are in the input-time table. Others have to be processed at print time, and these are in the print-time table. Some of the control characters appear in both tables. In any event, a search is made of the input-time protocol table, and if a match is found with the character that has been input, an address is obtained of the corresponding control function sequence of instructions to be performed. This is indicated in block 248. If a successful search is made, the appropriate function is performed in block 186.

By way of example, if the code following an escape code is the code for the letter V, the search of the printer "1 protocol tables will locate the address SETBOD, which is the address for the routine to change the input baud rate. This sequence of instructions involves inputting another character indicative of the new baud rate, as shown at 250, then storing this in an appropriate baud rate indicator, as indicated at 252.

Other functions that may be performed at input time are shown in FIGS. 9 and 10. Specifically, these involve changing the data input standard from serial to parallel or parallel to serial. As indicated at 254 and 256, these are relatively simple sequences of instructions involving only the setting of an appropriate flag for parallel or serial input. These flags are referred to by the microprocessor 30 when processing input from the computer 24, to insure that the appropriate control logic is used for either the serial or the parallel data transmission standard.

The DIP switches 90 (FIG. 3) play an important role in allowing the interface to be adapted to emulate various printers. Other interface parameters are also set initially through these switches, and some may be later changed by control codes transmitted to the interface. Accordingly, it will be useful to list the meanings of the switch positions. There are eight switches in each of three switch packages, designated the top switches (T1-T8), center switches (C1-C8) and bottom switches (B1-B8). Their meanings are shown below in Table 1. (Unless stated otherwise, a switch in the OFF position has the opposite meaning to that given for the ON position.)

### TABLE 1

| | |
|---|---|
| TI ON : | Continuous paper is in the printer |
| TI OFF: | Cut paper is in the printer |
| T2 ON : | Sheet feeder is present |
| T3 ON : | Invert polarity of RS-232 reverse channel signal (normally negative-busy) |
| T4 ON : | 8 lines per inch vertical motion |
| T4 OFF: | 6 lines per inch vertical motion |
| T5-T8 : | Language selection |
| | |
| C1 ON : | "Ready" polarity is + when ready |
| C1 OFF: | "Ready" polarity is - when ready |
| C2 ON : | Print the ASCII character 7FH (delete) |
| C3 ON : | Negative strobe signal |
| C3 OFF: | Positive strobe signal |
| C4 ON : | Automatic baud rate selection |
| C5-C8 : | Protocol selection (see Table 2) |

B1 ON :   Automatic line feed with carriage return

B2 ON :   Serial data interface

B2 OFF:   Parallel data interface

B3 ON :   Even parity if B2 ON; negative acknowledge
          pulse if B2 OFF

B3 OFF:   Odd parity if B2 ON; positive  acknowledge
          pulse if B2 OFF

B4 ON :   Parity ON if B2 ON; MSB of device address
          if B2 OFF

B4 OFF:   Parity OFF if B2 ON; MSB of device address
          if B2 OFF

B5-B8 :   B2 OFF, low four bits of device address
          B2 ON, baud rate as follows:

| B5-B8 (1 = OFF) | BAUD RATE |
|---|---|
| 0000 | 50 |
| 0001 | 75 |
| 0010 | 110 |
| 0011 | 134.5 |
| 0100 | 150 |
| 0101 | 300 |
| 0110 | 600 |
| 0111 | 1200 |
| 1000 | 1800 |
| 1001 | 2000 |
| 1010 | 2400 |
| 1011 | 3600 |
| 1100 | 4800 |
| 1101 | 7200 |
| 1110 | 9600 |
| 1111 | 19200 |

TABLE 2

| C5-C8 (1 = OFF) | Code following ESC ESC | Protocol |
|---|---|---|
| 1000 | H | NEC 3510 |

| | | |
|---|---|---|
| 1001 | I | DIABLO 630 |
| 1010 | J | QUME SPRINT 9 |
| 1011 | K | ATARI 825 |
| 1100 | L | IBM |
| 1101 | M | DIAGNOSTIC |
| 1110 | N | CII 2000 |
| 1111 | O | SOFTKEY |
| 0000-0111 | @, A-G | not defined |

Important among the DIP switches are those designated C1, C3 and B1-B4. These switches define in detail the data transfer standard to be used, and allow the interface to be quickly adapted for use with practically any computer.

In addition to the DIP switches, there are several printer front panel switches that are monitored by the interface throughout its operation. These are the form length switches, to select form length in increments of 1/6th of an inch, the character pitch switch, switchable to 10, 12 or 15 c.p.i., the line spacing selection switch, switchable to 1, 1.5 or 2 lines per line feed, and three printer control push buttons. The printer bushbutton controls include a READY switch that toggles between on-line and off-line conditions when pressed, a line-feed switch operable only in the off-line condition, and a top-of-form switch operable in the off-line condition.

Another important aspect of the present invention is its ability to adapt automatically to the baud rate at which data is transmitted by the computer in serial mode. If DIP switch C4 is on, the microprocessor monitors the baud rate of the first character to be transmitted, which has to be a particular code, namely a carriage return (hexadecimal code ODO. The baud rate in the interface 22 is then selected accordingly for all subsequent data transmission.

Many of the control functions selectable by means of the DIP switches in accordance with Table 1 are also selectable by control codes transmitted from the computer. A complete list of these control codes is given in Appendix A to this specification. The codes given in the appendix are those for operation of the interface when not in emulation of another printer. That is, the codes represent the protocol of the actual printer used in the preferred embodiment.

Appendix B contains complete schematic diagrams of the interface, and Appendix C is a complete assembly-language listing of the programs employed by the interface microprocessor.

It will be appreciated from the foregoing that the present invention represents a significant advance in the field of computer printers. In particular, the invention provides an extremely convenient computer-printer interface that can be more easily adapted to connect to any of a variety of computers and emulate any of a variety of printers under manual or computer control, without complicated wiring or jumpering of components. It will also be appreciated that, although a specific embodiment of the invention has been described in detail by way of illustration, various modifications may be made without departing from the spirit and scope of the invention. Accordingly, the invention is not to be limited except as by the appended claims.

WE CLAIM:

1.    A universal computer-printer interface for installation within a printer housing, to allow the printer to be connected to a selected one of a variety of computers and to emulate any of a variety of printers, said interface comprising:

register means, for registering data received from the computer;

serial data transfer control means;

parallel data transfer control means;

multi-conductor means for connecting said register means and said serial and parallel data transfer control means to the computer, including a multi-pin plug selected for connection to the selected computer;

protocol selection means, including a plurality of manual switches mounted on the printer housing, for selecting a protocol of printer control codes corresponding to those of a selected printer to be emulated;

data transfer mode selection means, for selecting an appropriate serial or parallel data transfer mode;

buffer memory means, for storing printer control codes and character codes as received from the computer;

means coupled to said protocol selection means, for generating printer control signals in response to detection of printer control codes transmitted from the computer, whereby the printer will be controlled in accordance with the protocol of control codes of the printer selected for emulation; and

means for generating print signals corresponding to the printable character codes stored in said buffer memory means.

2. A universal computer-printer interface as set forth in claim 1, wherein said protocol selection means also includes means for selecting a set of protocols in response to control codes transmitted from the computer.

3. A universal computer-printer interface as set forth in claim 1, wherein said data transfer mode selection means includes manually switchable means for selecting a data transfer mode for use in said interface.

4. A universal computer-printer interface as set forth in claim 1, wherein said means for generating printer control signals includes:

means for accessing protocol table corresponding to a last-selected printer protocol, each entry in the table having a control code and a corresponding pointer to a control function to be performed;

means for finding a match between a received control code and an entry in a list of control codes in the selected protocol table; and

means for initiating the control function corresponding to the indicator in the matching entry of the protocol table.

5. A universal computer-printer interface as set forth in claim 4, wherein:

said means for accessing a protocol table includes a protocol table pointer; and

said protocol selection means operates to change the value of said protocol table pointer.

6. A universal computer-printer interface as set forth in claim 5, wherein said protocol selection means includes:

means for changing the protocol table pointer in response to control codes transmitted from the computer.

7. A universal computer-printer interface as set forth in claim 6 wherein said data transfer mode selection means includes:

manual switch means effective to select a data transfer mode effective when said interface is started up; and

means for changing the data transfer mode in response to a control code transmitted from the computer.

8. A universal computer-printer interface for installation in a printer housing for connection to the printer and to selected one of a variety of computers, said interface being controllable to emulate any of a variety of printers, said interface comprising:

register means, for registering data received from the computer;

serial data transfer control means, for controlling the flow of data from the computer in a serial fashion;

parallel data transfer control means, for controlling the flow of data from the computer in a parallel fashion;

a multi-conductor cable for connecting said register means and said serial and parallel data transfer control means to the computer, said cable having a multi-pin plug for connection to the selected computer, and said cable being selected from a plurality of such cables with different multi-pin plugs designed for connection to different computers;

protocol selection means, including a set of switches mounted on the printer housing, for selecting from a plurality of protocols of printer control codes a protocol corresponding to a selected printer to be emulated;

data transfer mode selection means, for selecting an appropriate serial or parallel data transfer mode;

data transfer signal polarity switches for selection of appropriate signal polarities to match those used in the computer;

input buffer memory means, for storing printer control codes and character codes as received from the computer;

print buffer memory means, for the temporary storage of data prior to printing;

input processing means, operative in response to the input of data from the computer, to store incoming data in said input buffer memory means;

output processing means, for transferring data from said input buffer memory means to said print buffer memory means, including means for generating print signals corresponding to the printable character codes transferred to said print buffer memory means; and

means coupled to said protocol selection means, for generating printer control signals in response to detection of printer control codes transmitted from the computer, whereby the printer will be controlled in accordance with the protocol of control codes of the printer selected for emulation.

9. A universal computer-printer interface as set forth in claim 8, wherein said means for generating printer control signals includes:

first protocol translation means, activated by said input processing means to generate control signals for printer control codes that are to be initiated at input processing time; and

second protocol translation means, activated by said output processing means to generate control signals for printer control codes that are to be processed at output processing time.

10. A universal computer-printer interface as set forth in claim 8, wherein said protocol selection means includes means responsive to control codes transmitted from the computer, for selecting a set of protocols for use in said interface.

11. A universal computer-printer interface as set forth in claim 8, wherein said data transfer mode selection means includes manually switchable means for selecting a data transfer mode for use in said interface.

12. A universal computer-printer interface as set forth in claim 8, wherein said means for generating printer control signals includes:

means for accessing a protocol table corresponding to a last-selected printer protocol, each entry in the table having a control code and a corresponding pointer to a control function to be performed;

means for finding a match between a received control code and an entry in a list of control codes in the selected protocol table; and

means for initiating the control function corresponding to the indicator in the matching entry of the protocol table.

13. A universal computer-printer interface as set forth in clain 9, wherein said first and second protocol translation means each include:

means for accessing a protocol table corresponding to a last-selected printer protocol, each entry in the table having a control code and a corresponding poiknter to a control function to be performed;

means for finding a match between a received control code and an entry in a list of control codes in the selected protocol table; and

means for initiating the control function corresponding to the indicator in the matching entry of the protocol table.

14.    A universal computer-printer interface as set forth in claim 12 or 13, wherein:

said means for accessing a protocol table includes a protocol table pointer; and

said protocol selection means operates to change the value of said protocol table pointer.

15.    A universal computer-printer interface as set forth in claim 14, wherein said protocol selection means also includes:

means for changing the protocol table pointer in response to a control code transmitted from the computer.

16.    A universal computer-printer interface as set forth in claim 15, wherein said data transfer mode selection means includes:

manual switch means effective to select a data transfer mode effective when said interface is strted up; and

means for changing the data transfer mode in response to a control code transmitted from the computer.

17. A universal computer-printer interface as set forth in claim 8, and further including:
means for selecting a baud rate suitable to receive data from the computer.

18. A universal computer-printer interface as set forth in claim 17, wherein said means for selecting a baud rate is operable automatically in response to transmission of a first character code from the computer.

19. A universal computer-printer interface as set forth in claim 8, wherein said means for generating printer control signals includes:
means for initiating a change in the proportional spacing allocated to a selected character.

20. A universal computer-printer interface as set forth in claim 8, wherein said means for generating printer control signals includes:
means for initiating right-margin justification by insertion of space increments between words of a print line, without changing the proportinal spaces allocated to characters within words.

21. A universal computer-printer interface as set forth in claim 20, wherein said means for generating printer control codes further includes:
means for changing a margin justification limit indicative of the maximum space to be filled by justification.

Fig. 1

Fig. 2

Fig. 4A

Fig. 4B

Fig. 5

0096407

1/5

**Fig. 3**

OSCILLATOR ~100

102~ DIVIDE-DOWN CIR.
104~ BAUD RATE CLK.
106~ OTHER CLK. SIGNALS

POWER ON RESET
108~ 112~
RESET CIRCUIT ~114 SYSTEM RESET SIGNAL
110~ RESET μP

INT. (INTERRUPT) ~116

MICRO - PROCESSOR ~30

ADDRESS BUS

3 ~78 ~80
~126

ADDRESS DECODERS ~96
~98
B

RANDOM ACCESS MEMORY 74~
READ ONLY MEMORY 76~
FORMS SEL. SW. 86~
FR PANEL SW 88~
DIP SW. 90~
SEL CABLE INPUTS 92~
SEL OUT-PUTS 94~

~82 ~84
C
A ~128
~72

~126 122~
A
GATES
...
120~
PRINTER ~20

LATCH WITH GATED OUTPUT 138~ 136~
...
134~
PARALLEL DATA INPUTS

USART (SER.-PAR) 160~ 156~ 158~
132~
SERIAL CONTROL CIRCUITRY
162~ 164~
154~ SERIAL DATA IN
OTHER SERIAL CONTROLS

INT.
116~ 144~ C ~148
INTERRUPT PRO. CIR.
B
~152
130~ PARALLEL CONTROL CIRCUITRY
140~ 142~ 146~
STB. DAV ~150
OTHER PARALLEL CONTROLS

26~ CABLE TO/FROM COMPUTER (24)

Fig. 6

GET A CHARACTER FROM INPUT BUFFER —172

IDLE LOOP —174

READ & PROCESS SWITCHES —194

180

PRINTABLE CHARACTER ? —196  → YES —198

NO

CHECK FUNCTION TABLE FOR CHARACTER —200

EXECUTE DESIGNATED FUNCTION (IF ANY) —202 — SETS APPROPRIATE FLAGS IN PRINT BUFFER

IF ESC. CODE, GET NEXT CHARACTER —204

OBTAIN POINTER TO PRINT-TIME PROTOCOL TABLES —206

OBTAIN FUNCTION ADDRESS FROM PROTOCOL TABLES —210

EXECUTE DESIGNATED FUNCTION —212 — SETS APPROPRIATE FLAGS IN PRINT BUFFER

OBTAIN PROPORTIONAL SPACING DATA —218

STORE CHARACTER IN PRINT BUFFER —220

PRINT BUFFER FULL ? —222

NO

YES

ADJUST LINE FOR CENTERING OR JUSTIFICATION —226

FORMS CONTROL IF AT END OF FORM —228

DECIDE IF FORWARD OR REVERSE PRINTING —230

PRINT A LINE FROM PRINT BUFFER —232

224

Fig. 7

INTERRUPT

SAVE REGS. — 182

STORE CHAR. IN INPUT BUFFER — 184

PRINTABLE CHARACTER ? — 240

YES — 242

NO

OBTAIN POINTER TO PROTOCOL TABLES — 244

SEARCH INPUT PROTOCOL TABLE — 246

OBTAIN ADDRESS OF CONTROL FUNCTION (IF ANY) — 248

PERFORM CONTROL FUNCTION — 186

RESTORE REGS. — 188

RETURN

PROTOCOL TABLE POINTER — 208

| PRINTER # 1 PROTOCOLS | | | |
|---|---|---|---|
| INPUT-TIME | | PRINT TIME | |
| CODE | ADDRESS | CODE | ADDRESS |
| V | SETBOD | ESC | CHOOSE |

| PRINTER # 2 PROTOCOLS | | | |
|---|---|---|---|
| INPUT-TIME | | PRINT-TIME | |
| CODE | ADDRESS | CODE | ADDRESS |
| HT | WCESG | ESC | CHOOSE |
| VT | WCESG | FF | SETLPP |
| FF | WCESG | RS | STVMI |

PRINTER # 3 PROTOCOLS

SETBOD

INPUT NEXT CHARACTER (BAUD CODE) — 250

SET NEW BAUD RATE — 252

EXIT

## Fig. 8

```
        CHOOSE
          │
          ▼
┌─────────────────────┐
│  GET  NEXT          │─── 214
│  CHARACTER FROM     │
│  INPUT BUFFER       │
└─────────────────────┘
          │
          ▼
┌─────────────────────┐
│  CHANGE             │─── 216
│  PROTOCOL TABLE     │
│  POINTER            │
└─────────────────────┘
          │
          ▼
        EXIT
```

## Fig. 9

```
        WCPAR
          │
          ▼
┌─────────────────────┐
│  SET FLAG           │─── 254
│  FOR  PARALLEL      │
│  INPUT              │
└─────────────────────┘
          │
          ▼
        EXIT
```

## Fig. 10

```
        WCSER
          │
          ▼
┌─────────────────────┐
│  SET FLAG           │─── 256
│  FOR  SERIAL        │
│  INPUT              │
└─────────────────────┘
          │
          ▼
        EXIT
```

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | ELEKTRONISCHE RECHENANLAGEN, vol. 22, no. 2, April 1980, pages 83-88, Munich, DE. D. ECKERT: "Ein Implementierungsverfahren für Emulatoren zur Verbindung von Terminal- mit Hauptrechnersystemen" * Pages 83-85, column 1, line 24; figure 1 * | 1,8 | G 06 F 3/12 |
| A | US-A-4 281 315 (BAUER et al.) * Abstract; figure 1; column 1, line 48 - column 2, line 40 * | 1,8 | |
| A | US-A-3 828 325 (STAFFORD et al.) * Abstract; figures 1,2; column 1, line 7 - column 2, line 38; column 4, lines 26-34 * | 1,8 | TECHNICAL FIELDS SEARCHED (Int. Cl. ³) G 06 F |
| A | ELECTRONIC DESIGN, no. 22, October 1981, pages 113-118, Waseca, MN., Denville, NJ., USA K.S. PADDA: "Universal peripheral controller frees CPU for high-level work" * Figures 1,2; page 1 - page 3, column 2, line 11 * | 1,8 | |
| A | EP-A-0 019 757 (SIEMENS AG.) * Abstract; figure 2; claim 1 * | 1,8 | |

--- -/-

The present search report has been drawn up for all claims

| Place of search THE HAGUE | Date of completion of the search 09-09-1983 | Examiner BECKER K.H. |
|---|---|---|

## European Patent Office

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | WO-A-8 002 754 (MICORNOLOGY LTD.) <br> * Abstract; figure 1; claims 1,2 * <br><br> --- | 1,8 | |
| A | US-A-4 293 909 (CATILLER et al.) <br> * Abstract; figure 4A; column 1, line 44 - column 3, line 44; column 6, lines 29-34 * <br><br> ----- | 1,8 | |

TECHNICAL FIELDS
SEARCHED (Int. Cl. ³)

The present search report has been drawn up for all claims

| Place of search | Date of completion of the search | Examiner |
|---|---|---|
| THE HAGUE | 09-09-1983 | BECKER K.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82